# EUROPÄISCHE PATENTSCHRIFT

(11) **EP 2 172 093 B1**
(45) Veröffentlichungstag und Bekanntmachung des Hinweises auf die Patenterteilung: **07.03.2012**
(21) Anmeldenummer: 09012370.4
(22) Anmeldetag: 30.09.2009
(51) Int. Cl.: A01D 33/10

(54) **Aufnahmegerät**
Pick-up device
Appareil de ramassage

(30) Priorität: 01.10.2008 DE 102008049845; 19.12.2008 DE 102008063969
(43) Veröffentlichungstag der Anmeldung: 07.04.2010
(73) Patentinhaber: Holmer Maschinenbau GmbH, 84069 Eggmühl (DE)
(72) Erfinder: Stöckl, Hubert, 93326 Offenstetten (DE); Marx, Stefan, 93051 Regensburg (DE)
(74) Vertreter: Graf Glück Habersack Kritzenberger

(56) Entgegenhaltungen:
- EP-A- 0 732 047
- DE-A1- 2 721 125
- DE-A1- 10 047 420
- US-A- 5 387 155

## Beschreibung

Die Erfindung bezieht sich auf ein Aufnahmegerät gemäß Oberbegriff Patentanspruch 1 sowie auf ein Verfahren gemäß Oberbegriff Patentanspruch 15, jeweils zum Aufnehmen von Erntegut in Form von Wurzelfrüchten, beispielsweise Zuckerrüben aus einer Miete oder einem Haufen, zu denen das Erntegut nach dem Ernten bzw. Roden gesammelt wurde.

Aufnahmegeräte dieser Art sind bekannt (EP 0 732 047 A1) und werden als Arbeitsgerät oder -Aggregat an vorzugsweise selbstfahrenden Lade- und Reinigungsmaschinen verwendet, und zwar in der Weise, dass das mit dem Aufnahmegerät aufgenommene und an dem Erntegutauslass dieses Gerätes geförderte Erntegut dann auf einem Transportsystem durch die Lade- und/oder Reinigungsmaschine transportiert und auf ein bereitstehendes Transportfahrzeug verladen wird.

Das Aufnahmegerät dient dabei zum Aufnehmen des Erntegutes auf großer Breite und zum Zusammenführen des Erntegutes an den Erntegutauslass des Aufnahmegerätes bzw. auf einen diesem Auslass bildenden Transporteur. Gleichzeitig dient das Aufnahmegerät auch zur Reinigung des Erntegutes, d.h. zum Entfernen von Bodenresten und anderen Fremdbestandteilen, sofern dies notwendig und oder erwünscht ist. Hierfür ist das Aufnahmegerät an wenigstens ein Aufnahmeorgan, mit welchem das Erntegut aufgenommen wird, anschließend mit einer Transportfläche ausgebildet, die von wenigstens zwei Gruppen von Transportwalzen gebildet ist, von denen wenigstens eine erste Gruppe von Transportwalzen für ein Auseinanderführen des von dem Aufnahmeorgan aufgenommenen Erntegutes, d.h. für ein Fördern in einer von dem Erntegutauslass wegführenden Förderrichtung und wenigstens eine zweite Gruppe von Walzen für ein Zusammenführen des Erntegutes am Erntegutauslass, d.h. für eine zum Erntegutauslass führende Förderrichtung ausgebildet und/oder antreibbar sind, sodass für das Erntegut auf der Transportfläche ein möglichst langer, das Abreinigen ermöglichender Transportweg ergibt. Bei dem bekannten Aufnahmeaggregat ist vorgesehen zusätzlich zu den als Verteilerwalzen wirkenden und den als Sammelwalzen wirkenden Walzen eine konische Übergabewalze mit einem Walzendurchmesser vorzusehen, der zu dem dem Erntegutauslass entfernt liegenden Walzenende hin abnimmt. Das bekannte Aufnahmegerät ist allein schon durch die Verwendung einer konischen Walze konstruktiv aufwendig und teuer. Außerdem gestattet das bekannte Aufnahmegerät keine Anpassung der Arbeitsweise an den jeweils notwendigen und/oder gewünschten Grad der Reinigung des Erntegutes.

Bekannt ist weiterhin auch eine mehrreihige Rübenerntemaschine (DE 27 21 125 B1), deren Rodeaggregat eine auf die Rodeschare in Transportrichtung des Rode- oder Erntegutes folgende Reinigungs- und Transportvorrichtung aufweist, deren Transportebene von einer Vielzahl von aneinander anschließenden Walzen gebildet ist, die derart umlaufend antreibbar sind, dass das Rode- oder Erntegut an einem Auslass der Transportebene mittig zusammengeführt von der Transport- und Reinigungsvorrichtung an eine weitere Transportvorrichtung der Rübenerntemaschine weitergeleitet wird.

Aufgabe der Erfindung ist es, ein Aufnahmegerät aufzuzeigen, welches diese Nachteile vermeidet und es insbesondere auch ermöglicht, die Arbeitsweise des Aufnahmegerätes bzw. der von den Walzen gebildeten Transportfläche und damit den Verlauf des Erntegutstromes auf dieser Transportfläche den jeweiligen Gegebenheiten und dabei insbesondere auch den jeweils erforderlichen und/oder erwünschten Grad der Reinigung des Erntegutes anzupassen.

Zur Lösung dieser Aufgabe ist ein Aufnahmegerät entsprechend dem Patentanspruch 1 ausgebildet. Ein Verfahren zur Aufnahme von Erntegut, insbesondere von Wurzelfrüchten, ist Gegenstand des Patentanspruchs 15.

Durch den eigenständigen und individuell ansteuerbaren Antrieb für die wenigstens eine erste Walzengruppe ist es möglich, die Wegstrecke des Erntegutes auf der Transportfläche den jeweiligen Gegebenheiten anzupassen, d.h. durch Erhöhung der Drehzahl der wenigstens einen Walze der zumindest einen ersten Walzengruppe die Wegstrecke des Erntegutstromes zu erhöhen, um eine Reinigung auch bei starker Verschmutzung des Erntegutes sicher zu stellen, oder aber durch Reduzierung der Drehgeschwindigkeit der wenigstens einen Walze der zumindest einen ersten Walzengruppe die Wegstrecke des Erntegutstromes auf der Transportfläche zu reduzieren, und zwar dann, wenn eine Reinigung des Erntegutes nicht oder nur in einem geringen Maße notwendig und/oder erwünscht ist. Durch diese Anpassung der Wegstrecke des Erntegutstromes wird insbesondere ein effektiver Einsatz der für den Antrieb des Aufnahmegerätes benötigten Energie erreicht.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

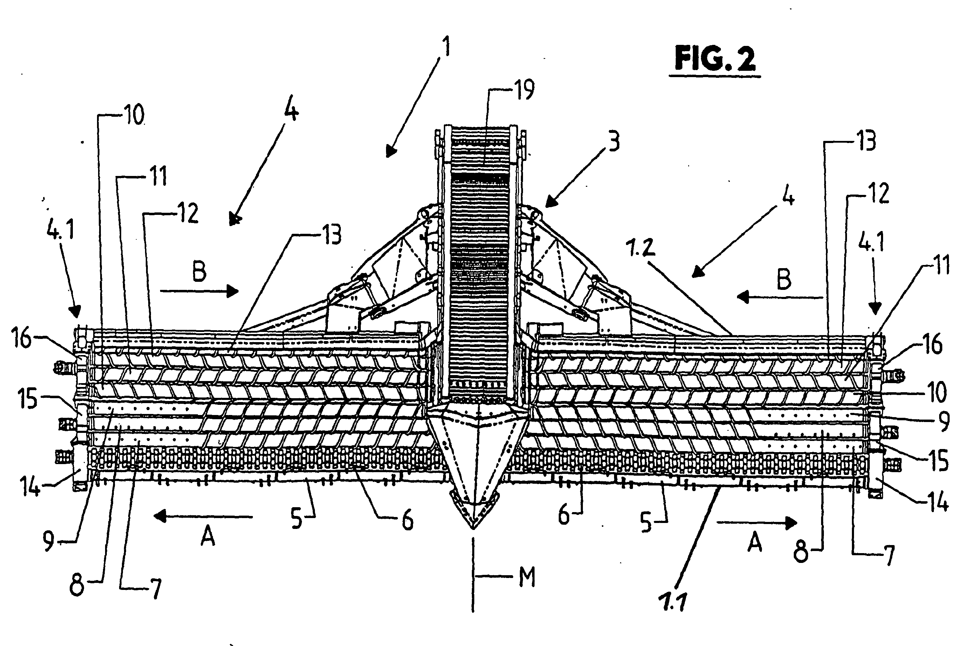

- Fig. 1 und 2: ein Aufnahmegerät gemäß der Erfindung in Vorderansicht sowie in Draufsicht;

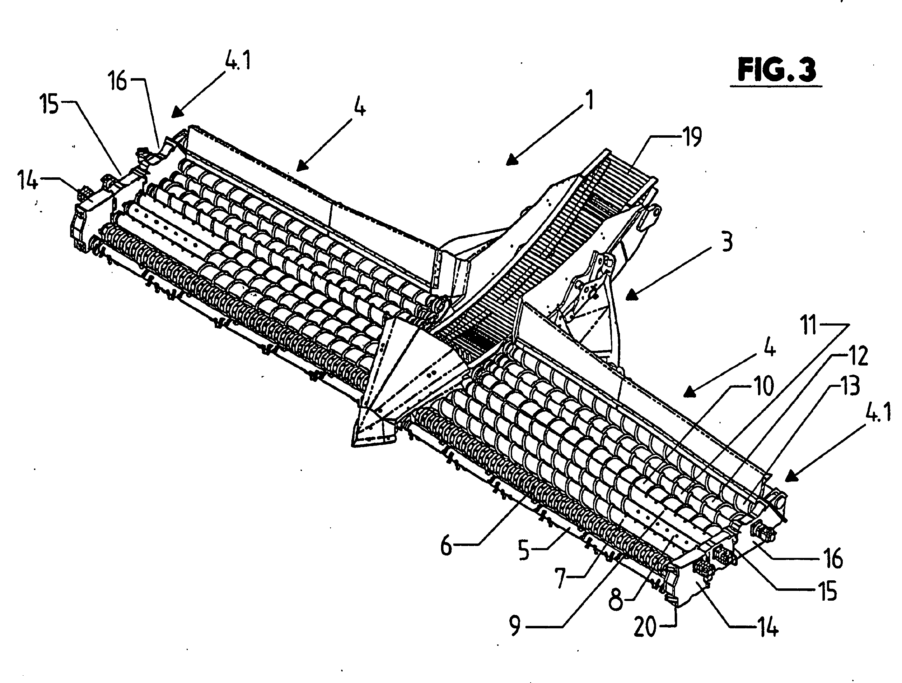

- Fig. 3: das Aufnahmegerät der Figuren 1 und 2 in einer perspektivischen Ansicht von oben;

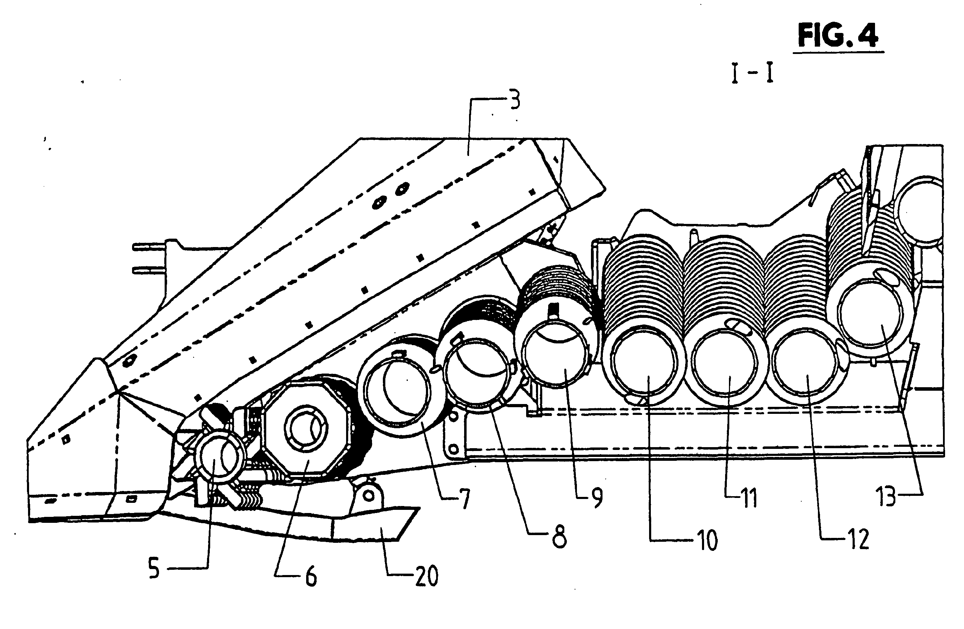

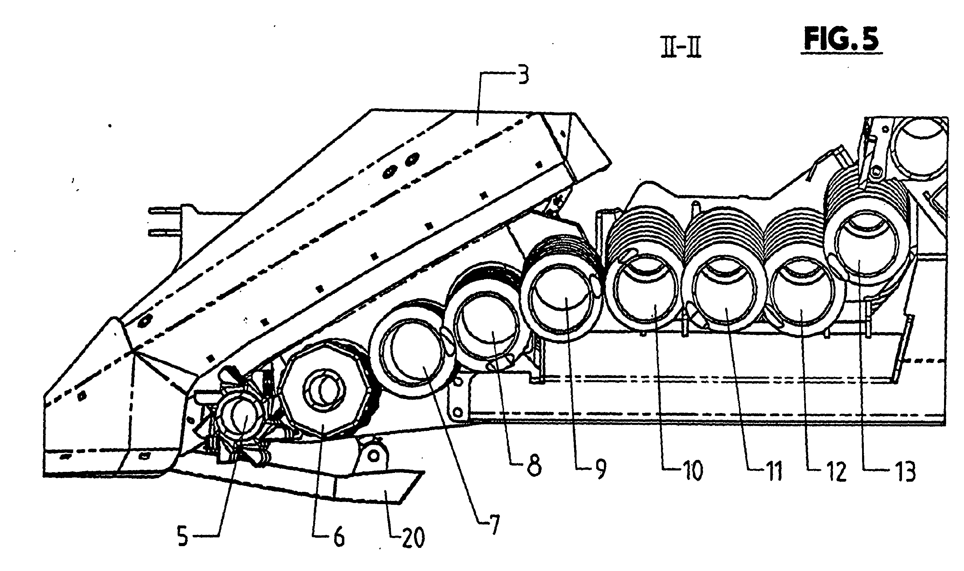

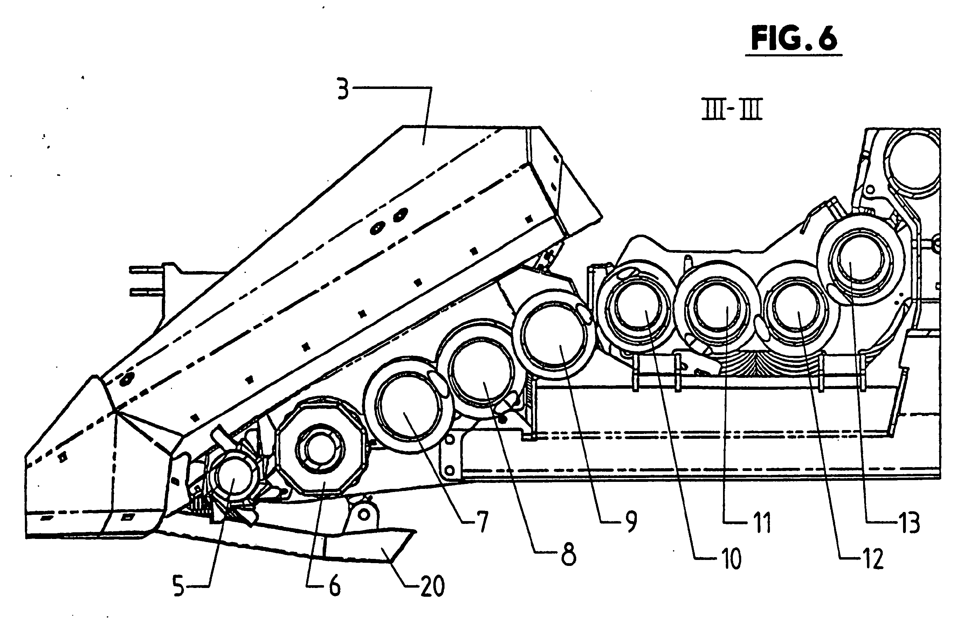

- Fig. 4 - 6: Schnitte entsprechend den Linien I - I, II - II und III - III der Figur 1;
- Fig. 7: in Teildarstellung und im Schnitt eine Teillänge einer Förderwalze.

Das in den Figuren allgemein mit 1 bezeichnete Aufnahmegerät ist beispielsweise Bestandteil einer nicht dargestellten selbstfahrenden Lade- und Reinigungseinrichtung für Wurzelfrüchte, beispielsweise für Zuckerrüben und dient im Zusammenwirken mit dieser Lade- und Reinigungsvorrichtung zum Aufnehmen und Reinigen der bereits gerodeten und zu großen Haufen, zusammen geführten Zuckerrüben 2 und zum Überladen der Zuckerrüben 2 auf ein Transportfahrzeug, wie dies dem Fachmann beispielsweise aus der EP 732 047 A1 bekannt ist.

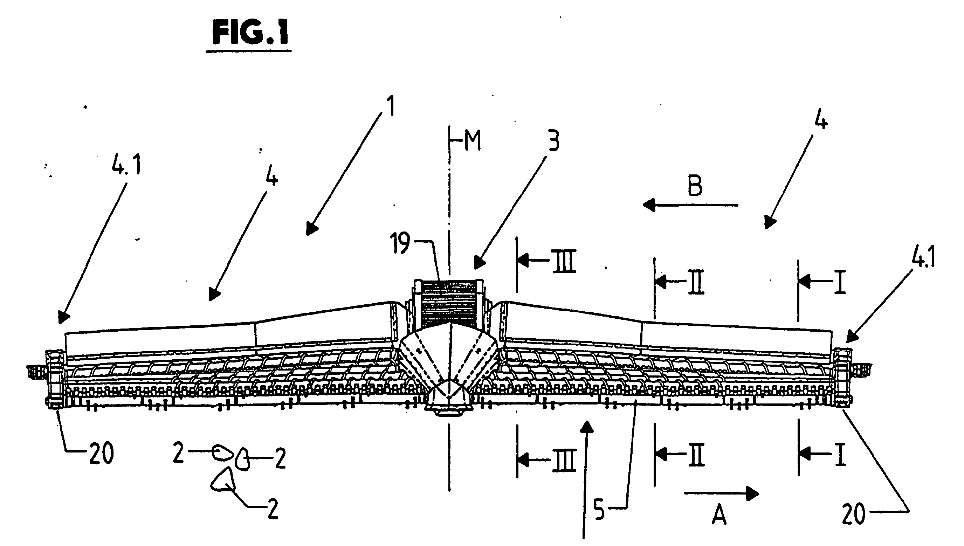

Das Aufnahmegerät besteht aus einem mehrteiligen Rahmen und zwar bei der dargestellten Ausführungsform aus einem mittleren Rahmen 3 sowie aus zwei Rahmen 4, die in entgegen gesetzter Richtung flügelartig von dem im Verwendungsfall mit der selbstfahrenden Lade- und Reinigungsmaschine verbundenen Rahmen wegstehen und zum Fahren auf öffentlichen Straßen und Wegen an den Rahmen 3 bzw. an das Lade- und Reinigungsfahrzeug heranklappbar sind. Das Aufnahmegerät 1 ist weiterhin in Bezug auf eine vertikale Mittelebene M des mittleren Rahmens 3, die im Verwendungsfall auch die Längsachse des nicht dargestellten Lade- und Reinigungsfahrzeugs einschließt, spiegelsymmetrisch ausgebildet, was insbesondere auch für die Rahmen 4 bzw. für die dortige Ausbildung des Aufnahmegerätes 1 gilt, sodass es für das Verständnis der Erfindung ausreichend ist, nur die Ausbildung der Funktionselemente und deren Wirkung an einem Rahmen 4, beispielsweise an dem in der Figur 1 rechten Rahmen 4 zu beschreiben.

An dem Rahmen 4 sind mehrere, sich jeweils über die gesamte Länge des Rahmens 4 erstreckende und an dem Rahmen 4 drehbar gelagerte Walzen, d.h. bei der dargestellten Ausführungsform insgesamt neun Walzen 5 - 11 drehbar gelagert, von denen die an der Vorderseite 1.1 des Aufnahmegerätes vorgesehene erste Walze 5 als Fingerwalze und die zugehörige Walze 6 als Scheibenwalze mit einer Vielzahl von jeweils an ihrem Umfang achteckig ausgebildeten Scheiben ausgeführt. Die Walze 5 dient dabei als Aufnahmewalze zum Aufnehmen der Zuckerrüben aus dem jeweiligen Haufen bzw. zum Fördern der Zuckerrüben auf die von den anschließenden Walzen und dabei insbesondere von den Walzen 7 - 13 gebildeten Transportebene des Rahmens 4. Die Walze 6 dient im Wesentlichen zum Reinigen der als Fingerwalze ausgebildeten Walze 5.

Die Walzen 5 - 13 schließen in der Wertigkeit ihrer Bezugsziffern in einer Richtung von der Vorderseite 1.1 des Aufnahmegerätes 1 in Richtung zur Rückseite 1.2 dieses Aufnahmegerätes aneinander an und bilden eine gemeinsame Transportebene für die Zuckerrüben 2.

Die Walzen 5 und 6 bilden eine erste Walzengruppe, die von einem ersten Antrieb 14 umlaufend antreibbar ist, und zwar gleichsinnig in einer für die Aufnahme der Zuckerrüben erforderlichen Drehrichtung.

Die Walzen 7, 8 und 9 bilden eine zweite Walzengruppe, die durch einen dieser Walzengruppe zugeordneten Antrieb 15 umlaufend antreibbar sind. Die Walzen 10 - 13 bilden eine dritte Walzengruppe, die durch einen dritten Antrieb 16 gleichsinnig antreibbar sind. Die Antriebe 14 - 16 sind beispielsweise jeweils Hydraulik-Motoren mit nachgeschalteten Getrieben. Die Antriebe 14 - 16 befinden sich bei der dargestellten Ausführungsform weiterhin an dem den mittleren Rahmen 3 entfernt liegenden Ende des jeweiligen Rahmens 4. Die Antriebe 14 - 16 sind weiterhin individuell zu- und wegschaltbar sowie in der Geschwindigkeit individuelle regelbar.

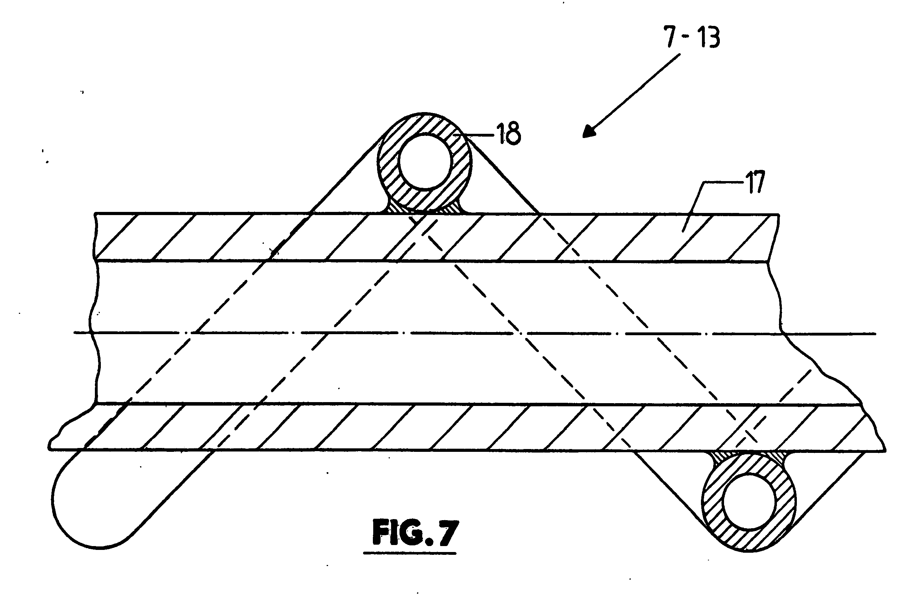

Die Walzen 7 - 13, die jeweils als schneckenartig wirkende Förderwalzen ausgebildet sind, bestehen bei der dargestellten Ausführungsform entsprechend der Figur 7 jeweils aus einem rohrartigen Walzenkörper 17, der über die gesamte Länge der jeweilige Walze 7 - 13 einen kreiszylinderförmigen Außenquerschnitt mit gleichbleibendem Durchmesser aufweist, sowie aus einer auf die Außenfläche des Walzenkörper 17 aufgebrachten schneckenartigen Struktur 18, die bei der dargestellten Ausführungsform von einem den Walzenkörper 17 schnecken- oder wendelartig umgebenden und mit dem Walzenkörper 17 verschweißten Rohr gebildet ist.

Die Walzen 7 - 9 sind dabei im Detail so ausgeführt und durch ihren Antrieb 15 so angetrieben, dass zumindest bei ausreichend hoher Drehgeschwindigkeit die Förderrichtung dieser Walzen bzw. des von diesen Walzen gebildeten Teils der Transportebene des Rahmens 4 zum äußeren Ende 4.1 dieses Rahmens gerichtet ist, wie dies in den Figuren mit den Pfeilen A angedeutet ist. Wie die Figuren weiterhin zeigen, sind die Walzen 7 - 9 so ausgeführt, dass deren schneckenartige Struktur 18 in Abstand vor dem außen liegenden Ende 4.1 des Rahmens endet, sodass die Walzen 7 - 9 nur auf ihrer mit der schneckenartigen Struktur 18 versehenen Teillänge als Förder- oder Verteilerwalzen wirken, nicht aber auf ihrer dem Rahmenende 4.1 benachbarten Teillänge, an der die schneckenartige Struktur 18 fehlt und die bei der dargestellten Ausführungsform etwa einem Drittel der gesamten Länge der Walzen 7 - 9 entspricht.

Wie die Figuren weiterhin zeigen, sind die Walzen 7 - 9 geneigt angeordnet, und zwar in der Weise, dass der von den Walzen 7 - 9 definierte Teil der Transportebene eine Barriere bildet, deren wirksame Höhe ausgehend von dem mittleren Rahmen 3 zu dem Rahmenende 4.1 hin abnimmt. Hierfür ist beispielsweise das Lagerelement wenigstens einer Walze 7 - 9, beispielsweise der mittleren Walze 8 dieser Walzengruppe an dem den Rahmen 3 benachbarten Ende auf einem etwas höherem Niveau als das Lager an dem anderen Walzenende angeordnet, wobei auch die Möglichkeit besteht, die Lagerung der Walzen 7 - 9 einstellbar auszubilden, sodass die Neigung dieser Walzen und damit die Wirkung der von ihnen gebildeten Barriere verändert werden kann.

Die Walzen 10 - 13 sind so ausgebildet und durch ihren Antrieb 16 so angetrieben, dass diese Walzengruppe bzw. der von ihr gebildete Teil der Transportebene des Rahmens 4 einen nach innen auf den Rahmen 3 gerichtete Förderwirkung entsprechend den Pfeilen B aufweist, das Erntegut durch die umlaufend angetriebenen Walzen 10 - 13 also zusammengeführt und auf das am Rahmen vorgesehene Transportband 19 gefördert wird, mit welchem das Erntegut über weitere Transportbänder oder Transporteure des nicht dargestellten Lade- und Reinigungsfahrzeugs an ein Transportfahrzeug zum Abtransportieren der Zuckerrüben 2 weitergeleitet wird.

Die Arbeitsweise des Aufnahmegerätes 1 lässt sich also so beschrieben, dass das Aufnahmegerät 1 mit selbstfahrenden Lade- und Reinigungsmaschine mit seiner Vorderseite 1.1 in die Menge der zu einem Haufen zusammen gebrachten gerodeten Zuckerrüben 2 hineinbewegt wird, wobei das Aufnahmegerät 1 zumindest an der Vorderseite 1.1 auch unterstütz durch an den Rahmenenden 4.1 vorgesehene Abstandhalter 20 in einem definierten Abstand von dem Untergrund geführt ist, sodass mit der umlaufend angetriebenen Walze 5 die Zuckerrüben 2 aufgenommen und auf die von den Walzen 5 - 13 gebildete Transportebene des jeweiligen Rahmens 4 gelangen. Ist eine Reinigung der Zuckerrüben 2, d.h. ein Entfernen von Ackerbodenresten von den Zuckerrüben 2 erforderlich, so werden die Walzen 7 - 9 durch ihren Antrieb 15 so angetrieben, dass die auf die Transportebene des jeweiligen Rahmens gelangten Zuckerrüben mit dieser Walzengruppe in Richtung des Pfeils A nach außen, d.h. in Richtung zu dem jeweiligen Rahmenende 4.1 hin gefördert werden und bevorzugt erst an der die Schneckenstruktur 18 nicht aufweisenden Teillänge der Walzen 7 - 9 von diesen auf den von den Walzen 10 - 13 gebildeten Teil der Transportebene gelangen und mit den von dem Antrieb 16 umlaufend angetriebenen Walzen 10 - 13 wieder nach innen, d.h. in Richtung auf den Rahmen 3 gefördert und an das Transportband 19 weitergeleitet werden. Durch das Fördern der Zuckerrüben 2 mit den Walzen 7 - 9 zunächst nach außen und anschließend mit den Walzen 10 - 13 wieder nach innen ergibt sich ein relativ langer Förderweg, auf dem das erforderliche Reinigen der Zuckerrüben bzw. das erforderliche Entfernen von Fremdstoffen, beispielsweise Ackerbodenreste von den Zuckerrüben 2 durch die Relativbewegung zwischen den Zuckerrüben 2 und den umlaufenden Walzen 7 - 13 erfolgen kann. Die entfernten Fremdstoffe, beispielsweise Ackerbodenreste fallen durch Öffnungen oder Spalte, die zwischen den Walzen 7 - 13 gebildet sind, nach unten.

Durch die Schrägstellung wenigstens einer Walze 7 - 9 und durch die hierdurch erzeugte Barriere wird die Förderwirkung der Walze 7, 8 und 9 nach außen unterstützt und insbesondere verhindert, dass bereits ein größerer Anteil der aufgenommenen Zuckerrüben 2 ohne eine Förderung nach außen unmittelbar auf den von den Walzen 10 - gebildeten Förderabschnitt gelangt.

Ist eine Reinigung der aufzunehmenden Zuckerrüben 2 nicht oder nur in einem geringen Ausmaß erforderlich, so kann durch entsprechende Ansteuerung des Antriebs 15 die Drehgeschwindigkeit der Walzen 7 - 9 so eingestellt oder reduziert werden, dass der größer Teil der von dem Aufnahmegerät aufgenommenen Zuckerrüben über die Walzen 7 - 9 unmittelbar auf den von den Walzen 10 - 13 gebildeten Förderbereich gelangt, und zwar ohne dass die Zuckerrüben 2 mit den Walzen 7 - 9 nach außen, d.h. zu dem jeweiligen Rahmenende 4.1 gefördert wurden. Durch die getrennten Antriebe 14 - 16 für die einzelnen Walzengruppen und dabei insbesondere für die Walzen 7 - 9 und die Walzen 10 - 13 besteht die Möglichkeit, die Betriebsweise des Aufnahmegerätes 1 den jeweiligen Erfordernissen, insbesondere auch dem jeweiligen Grad der Verunreinigung der aufzunehmenden Zuckerrüben 2 anzupassen und so insbesondere auch eine energiesparende Arbeitsweise für das Aufnahmegerät zu erreichen.

Die besonderen Vorteile des Aufnahmegerätes 1 lassen sich also, wie folgt zusammenfassen:
Da sämtliche Walzen, insbesondere auch die Walzen 7 - 13, die zum Auseinanderführen und zum Zusammenführen des Erntegutstromes bzw. der Zuckerrüben 2 dienen, über ihre gesamte Länge einen gleichbleibenden Außendurchmesser, insbesondere auch am jeweiligen Walzenkörper 17 aufweisen, können diese Walzen in nahezu identischer Form besonders preiswert hergestellt werden, und zwar beispielsweise unter Verwendung eines herkömmlichen, auf dem Markt erhältlichen Rohrprofils für den Walzenkörper 17 und unter Verwendung eines zu einer Wendel gebogenen Rohrprofils für die schneckenartige Struktur 18. Durch die getrennten, den jeweiligen Walzengruppen zugeordneten und individuell regelbaren Antriebe 14, 15 und 16 besteht die Möglichkeit, die Drehgeschwindigkeit der Walzen der einzelnen Walzengruppen nicht nur an die jeweils erforderliche Förderleistung des Aufnahmegerätes, sondern auch an die aktuellen Gegebenheiten optimal anzupassen, insbesondere auch an den tatsächlichen Verschmutzungsgrad des Erntegutes bzw. der Zuckerrüben bzw. an den erforderlichen Grad einer Abreinigung des Erntegutes.

Durch die Ausbildung der Antriebe 14, 15 und 16 als Hydraulikmotoren mit Getriebe ergibt sich eine besonders vereinfachte Antriebstechnik für die Walzen 5 - 13, die insbesondere auch das Heranklappen der Rahmen 4 an den mittleren Rahmen 3 bzw. an die selbstfahrende Lade- und Reinigungsmaschine für das Fahren auf öffentlichen Wegen und Straßen ermöglicht.

Wie die Figuren zeigen, sind die Walzen 7 - 9 hinsichtlich der Ausbildung der Förderschneckenstruktur 18 jeweils gleichsinnig ausgeführt. Durch den Antrieb 15 sind diese Walzen auch im gleichen Drehsinne angetrieben. Die Walzen 10 - 13 sind hingegen so ausgeführt, dass die wendel- oder förderschneckenartige Struktur 18 benachbarter Walzen 10 und 11 bzw. 11 und 12 bzw. 12 und 13 jeweils gegensinnig ausgeführt sind. Zur Erzielung der gemeinsamen Förderrichtung B werden die Walzen 10 - 13 durch den zugehörigen Antrieb 16 so angetrieben, dass benachbarte Walzen 10 und 11 bzw. 11 und 12 bzw. 12 und 13 jeweils entgegengesetzt umlaufen.

Wie die Figuren weiterhin zeigen, sind zumindest die einander zugehörigen Walzen 5 und 6 bzw. 7 - 9 bzw. 10 - 13 mit ihren Achsen jeweils in zueinander parallelen Ebenen angeordnet, die im Verwendungsfall des Aufnahmegerätes 1 horizontale oder im Wesentlichen horizontale Ebenen sind.

Wie die Figuren weiterhin zeigen, sind die Walzen 10 - 13 so angeordnet, dass der von diesen Walzen gebildete Teil der Förderfläche zu dem den Erntegutauslass bildenden Transportband 19 leicht ansteigt und zumindest in der Nähe dieses Transportbandes in einer vertikalen Querschnittsebene muldenartig ausgeführt ist.

### Bezugszeichenliste

- 1: Aufnahmegerät
- 1.1: Vorderseite des Aufnahmegeräte
- 1.2: Rückseite des Aufnahmegerätes
- 2: Zuckerrübe bzw. Erntegut
- 3: mittlerer Rahmen
- 4: äußerer Rahmen
- 4.1: außen liegendes Rahmenende
- 5 - 13: Walze
- 14, 15, 16: Antrieb
- 17: Walzenkörper
- 18: schneckenartige Struktur auf dem Walzenkörper
- 19: Transportband
- 20: Abstandhalter
- A: Förderrichtung der Walzen 7 - 9
- B: Förderrichtung der Walzen 10 - 13

## Patentansprüche

1. Aufnahmegerät für Erntegut, insbesondere Wurzelfrüchten, zur Verwendung an Lade- und/oder Reinigungsmaschinen mit wenigstens einem Aufnahmeorgan (5, 6) an einer Vorderseite des Aufnahmegerätes und mit einer von mehreren aneinander anschließenden und umlaufend antreibbaren Walzen (7 - 13) gebildeten und an das Aufnahmeorgan (5, 6) anschließenden Transportebene zum Transportieren von mit dem Aufnahmeorgan (5, 6) aufgenommenen Erntegut an einen in einer Transportrichtung anschließenden, das Erntegut aus dem Aufnahmegerät wegtransportierenden Transporteur (19), wobei die Walzen (7 - 13) der Transportebene wenigstens zwei Gruppen von Walzen (7 - 9; 10 - 13) bilden, von denen eine erste für ein Fördern des Erntegutes in einer ersten, von dem Erntegutauslass (19) wegführenden Transportrichtung (A) und eine zweite Walzengruppe für ein Fördern des Erntegutes in einer zweiten, auf den Erntegutauslass (19) gerichteten Transportrichtung (B) ausgebildet und/oder antreibbar sind, **dadurch gekennzeichnet,**
**dass** zumindest für die erste Walzengruppe (7 - 9) ein von den Antrieben des Aufnehmerorgans (5, 6) und der wenigstens einen weiteren Walzengruppe (10 - 13) unabhängiger und eigenständig steuerbarer Antrieb (15) vorgesehen ist.

2. Aufnahmegerät nach Anspruch 1 oder 2, **dadurch gekennzeichnet,**
**dass** für das wenigstens eine Aufnahmeorgan (5, 6) ein eigenständiger und individuell steuerbarer Antrieb (14) vorgesehen ist,
und/oder
**dass** für jede Walzengruppe (7 - 9; 10 - 13) ein eigenständiger und individuell steuerbarer Antrieb (15, 16) vorgesehen ist.

3. Aufnahmegerät nach einem der vorhergehenden Ansprüche, **dadurch gekennzeichnet, dass** das Aufnahmeorgan von wenigstens einer Fingerwalze (5) und einer parallel zu dieser Transport- und Reinigungswalze (6), beispielsweise Scheibenwalze (6) gebildet ist.

4. Aufnahmegerät nach einem der vorhergehenden Ansprüche, **dadurch gekennzeichnet, dass** die die Transportebene bildenden Walzen (7 - 13) jeweils aus einem zumindest an der Außen- oder Mantelfläche kreiszylinderförmigen Walzenkörper (17) mit einer auf diesen Walzenkörper aufgebrachten förderschneckenartigen Struktur (18) bestehen.

5. Aufnahmegeräte nach einem der vorhergehenden Ansprüche, **dadurch gekennzeichnet, dass** die wenigstens eine Walze (7 - 9) der ersten Walzengruppe gegenüber der horizontalen derart geneigt ist, dass das dem Erntegutauslass (19) benachbarte Walzenende höher liegt als das dem Erntegutauslass (19) entfernt liegende Walzenende.

6. Aufnahmegerät nach einem der vorhergehenden Ansprüche, **dadurch gekennzeichnet, dass** die wenigstens eine erste und/oder die wenigstens eine zweite Walzengruppe wenigstens zwei Walzen (7 - 9; 10 - 13) aufweisen, und dass zumindest die Walzen der jeweiligen Walzengruppe mit ihren Achsen in parallel zueinander verlaufenden Ebenen, vorzugsweise horizontalen oder im Wesentlichen in horizontalen Ebenen angeordnet sind.

7. Aufnahmegerät nach einem der vorhergehenden Ansprüche, **dadurch gekennzeichnet, dass** der Abstand zwischen Elementen, beispielsweise den Walzen (5, 6) des Aufnehmerorgans und der Abstand zwischen dem Aufnehmerorgan und der benachbarten Walze der Transporteben.e sowie zwischen benachbarten Walzen der Transportebene kleiner ist als die Abmessung der Wurzelfrüchte (2).

8. Aufnahmegerät nach einem der vorhergehenden Ansprüche, **dadurch gekennzeichnet, dass** die Walzen (7 - 9) der ersten Walzengruppe gleichsinnig ausgeführt und in ein und derselben Drehrichtung durch den zugehörigen Antrieb (15) antreibbar sind.

9. Aufnahmegerät nach einem der vorhergehenden Ansprüche, **dadurch gekennzeichnet, dass** einander benachbarte Walzen (10 - 13) der zweiten Walzengruppe bezüglich der förderschneckenartigen Struktur (18) gegensinnig ausgebildet und durch den Antrieb (16) gegenläufig antreibbar sind.

10. Aufnahmegerät nach einem der vorhergehenden Ansprüche, **dadurch gekennzeichnet, dass** der jeweilige Antrieb (14, 15, 16) an einer dem Erntegutauslass (19) entfernt liegenden Seite des wenigstens einen Aufnahmeorgans (5, 6) und der von den Walzen (7 - 13) gebildeten Transportebene angeordnet sind.

11. Aufnahmegerät nach einem der vorhergehenden Ansprüche, **dadurch gekennzeichnet, dass** der Erntegutauslass von einem Transporteur, beispielsweise von einem Transportband (19) gebildet ist, dessen Förderrichtung senkrecht oder quer zur ersten und zweiten Förderrichtung (A) der Walzengruppen (7 - 9; 10 - 13) orientiert ist.

12. Aufnahmegerät nach einem der vorhergehenden Ansprüche, **dadurch gekennzeichnet, dass** beidseitig von dem Erntegutauslass (19) jeweils wenigstens ein Aufnahmeorgan (5, 6) sowie eine von den Walzen (7 - 13) gebildete Transportebene vorgesehen ist.

13. Aufnahmegerät nach einem der vorhergehenden Ansprüche, **dadurch gekennzeichnet, dass** die wenigstens eine Walze (7 - 9) der wenigstens einen ersten Walzengruppe eine über die sonstige Transportebene vorstehende Barriere bildet, deren Höhe mit zunehmendem Abstand von dem Erntegutauslass (19) abnehmen.

14. Aufnahmegerät nach einem der vorhergehenden Ansprüche, **dadurch gekennzeichnet,**
**dass** die Walzen (10, 13) der wenigstens einen zweiten, das Erntegut an den Erntegutauslass (19) fördernden Walzengruppe einen zum Erntegutauslass (19) leicht ansteigenden Teil der Transportebene bildet,
und/oder
**dass** die Walzen (10, 13) der wenigstens einen zweiten, das Erntegut an den Erntegutauslass (19) fördernden Walzengruppe einen muldenartig oder förderrinnenartig ausgeführten Teil der Transportebene bildet,
und/oder
**dass** die Walzen (5, 6) des Aufnahmeorgans gleichsinnig antreibbar sind.

15. Verfahren zur Aufnahme von Erntegut, insbesondere von Wurzelfrüchten, aus einem Erntegut-Haufen unter Verwendung eines Aufnahmegerätes einer Lade- und/oder Reinigungsmaschine mit wenigstens einem Aufnahmeorgan (5, 6) an einer Vorderseite des Aufnahmegerätes und mit einer von mehreren aneinander anschließenden und umlaufend antreibbaren Walzen (7 - 13) gebildeten und an das Aufnahmeorgan (5, 6) anschließenden Transportebene zum Transportieren von mit dem Aufnahmeorgan (5, 6) aufgenommenen Erntegut an einen in einer Transportrichtung anschließenden, das Erntegut aus dem Aufnahmegerät wegtransportierenden Transporteur (19), wobei die Walzen (7 - 13) der Transportebene wenigstens zwei Gruppen von Walzen (7 - 9; 10 - 13) bilden, von denen eine erste für ein Fördern des Erntegutes in einer ersten, von dem Erntegutauslass (19) wegführenden Transportrichtung (A) und eine zweite Walzengruppe für ein Fördern des Erntegutes in einer zweiten, auf den Erntegutauslass (19) gerichteten Transportrichtung (B) ausgebildet und/oder antreibbar sind, **dadurch gekennzeichnet,**
**dass** zur Steuerung des Förderweges des Erntegutes auf der Transportebene zumindest der Antrieb die erste Walzengruppe (7 - 9) unabhängig von dem Aufnehmerorgan (5, 6) und von der wenigstens einen weiteren Walzengruppe (10 - 13) eigenständig gesteuert wird.

## Claims

1. Pick-up apparatus for harvested crops, more particularly root crops, for use on loading and/or cleaning machines with at least one pick-up member (5, 6) on a front side of the pick-up apparatus and with a transfer level adjoining the pick-up member (5, 6) and formed by several rotary driven rollers (7 - 13) which adjoin one another to transport the harvested crops picked up by the pick-up member (5, 6) to a transporter (19) which follows on in the transport direction and moves the harvested crops from the pick-up apparatus wherein the rollers (7 -13) of the transfer level form at least two groups of rollers (7 - 9, 10 - 13) of which a first group of rollers is designed and /or can be driven for conveying the harvested crops in a first transport direction (A) which moves away from the crop outlet (19) and a second group of rollers is designed and/or can be driven for conveying the harvested crops in a second transport direction (B) directed towards the crop outlet (19), **characterised in that** at least for the first group of rollers (7 - 9) a drive (15) is provided which is independent of the drive of the pick-up member (5, 6) and of the at least one further group of rollers (10 -13) and is able to be controlled autonomously.

2. Pick-up apparatus according to claim 1 or 2 **characterised in that** an independent and individually controllable drive (14) is provided for the at least one pick-up member (5, 6) and/or that an independent and individually controllable drive (15, 16) is provided for each group of rollers (7 - 9; 10 -13).

3. Pick-up apparatus according to one of the preceding claims, **characterised in that** the pick-up member is formed by at least one finger roller (5) and a transport and cleaning roller (6), by way of example disc roller (6), parallel to this.

4. Pick-up apparatus according to one of the preceding claims **characterised in that** the rollers (7 -13) forming the transfer level each consist of a roller body (17) which has a circular cylindrical shape at least on the outer or sleeve face as well as a screw conveyor type structure (18) applied to this roller body.

5. Pick-up apparatus according to one of the preceding claims **characterised in that** the at least one roller (7- 9) of the first group of rollers is inclined relative to the horizontal so that the end of the roller adjoining the crop outlet (19) is higher than the roller end lying remote from the crop outlet (19).

6. Pick-up apparatus according to one of the preceding claims **characterised in that** the at least one first and/or the at least one second group of rollers has at least two rollers (7 - 9; 10 - 13) and that at least the rollers of each relevant roller group are arranged with their axes in planes running parallel to one another, preferably in horizontal or substantially horizontal planes.

7. Pick-up apparatus according to one of the preceding claims **characterised in that** the spacing between elements, by way of example the rollers (5, 6) of the pick-up member and the spacing between the pick-up member and the adjoining roller of the transfer level as well as between adjoining rollers of the transfer level is smaller than the dimensions of the root crops (2).

8. Pick-up apparatus according to one of the preceding claims **characterised in that** the rollers (7 - 9) of the first roller group are designed to be in the same direction and can be driven in one and the same direction of rotation by the associated drive (15).

9. Pick-up apparatus according to one of the preceding claims **characterised in that** adjoining rollers (10 -13) of the second group of rollers are designed to be in opposite directions with regard to the screw conveyor type structure (18) and are drivable in opposite directions by the drive (16).

10. Pick-up apparatus according to one of the preceding claims **characterised in that** the relative drives (14, 15, 16) are arranged on a side of the at least one pick up member (5, 6) and the transfer level formed by the rollers (7 -13) remote from the crop outlet (19).

11. Pick-up apparatus according to one of the preceding claims **characterised in that** the crop outlet is formed by a transporter, by way of example by a conveyor belt (19) whose conveying direction is aligned perpendicular or transversely to the first and second conveyor direction (A) of the roller groups (7 - 9; 10 -13).

12. Pick-up apparatus according to one of the preceding claims **characterised in that** at least one pick-up member (5, 6) as well as one transfer level formed by the rollers (7 -13) are provided on each side of the crop outlet (19).

13. Pick-up apparatus according to one of the preceding claims **characterised in that** the at least one roller (7 - 9) of the at least one first roller group forms a barrier protruding beyond the other transfer level and whose height decreases with increasing distance from the crop outlet (19).

14. Pick-up apparatus according to one of the preceding claims **characterised in that** the rollers (10, 13) of the at least one second roller group conveying the crops to the crop outlet (19) forms a part of the transfer level which rises slightly towards the crop outlet (19) and/or that the rollers (10, 13) of the at least one second roller group conveying the crops to the crop outlet (19) forms a trough-like or conveyor channel like part of the transfer level and/or that the rollers (5, 6) of the pick-up member can be driven in the same direction.

15. Method for picking up harvested crops, more particularly root crops, from a harvested crop heap by using a pick-up apparatus of a loading and/or cleaning machine having at least one pick-up member (5, 6) on a front side of the pick-up apparatus and with one transfer level adjoining the pick-up member (5, 6) and formed by several rotationally drivable rollers (7-13) which adjoin one another to transport harvested crops picked up by the pick-up member (5, 6) to a transporter (19) which follows on in the transport direction and moves the harvested crops away from the pick-up apparatus wherein the rollers (7 -13) of the transfer level form at least two groups of rollers (7 - 9, 10-13) of which a first group is designed and/or can be driven for conveying the harvested crops in a first transport direction (A) leading away from the crop outlet (19) and a second roller group is designed and/or can be driven for moving the harvested crops in a second transport direction (B) which is directed to the crop outlet (19), **characterised in that** in order to control the conveyor path of the harvested crops on the transfer level at least the drive of the first group of rollers (7 - 9) is autonomously controlled independently of the pick-up member (5, 6) and of the at least one further roller group (10 -13).

## Revendications

1. Appareil de manutention pour produit de moisson, en particulier de racines et tubercules, destiné à l'utilisation sur des machines chargeuses et/ou nettoyeuses équipées d'au moins un organe de manutention (5,6) sur un côté frontal de l'appareil de manutention et d'un étage de transport formé de plusieurs cylindres (7-13) raccordés l'un à l'autre et rotatifs et raccordés à l'organe de manutention (5,6), pour le transport du produit de moisson manutentionné par l'organe de manutention (5,6) sur un transporteur (19) attelé dans une direction de transport et emmenant le produit de moisson depuis l'appareil de manutention, les cylindres (7-13) de l'étage de transport formant au moins deux groupes de cylindres (7-9;10-13), dont un premier est exécuté et/ou peut commander le transport du produit de moisson dans une première direction de transport (A) s'éloignant de la sortie du produit de moisson (19) et un deuxième groupe de cylindres est exécuté et/ou peut commander un transport du produit de moisson dans une deuxième direction de transport (B) orientée vers la sortie du produit de moisson (19),
**caractérisé en ce que**
au moins pour le premier groupe de cylindres (7-9), une commande (15) à manier de manière autonome et indépendante des commandes de l'organe de manutention (5,6) et du au moins un autre groupe de cylindres (10-13), est prévue.

2. Appareil de manutention selon la revendication 1 ou 2, **caractérisé en ce que** pour le au moins un organe de manutention (5,6), une commande autonome et à manier individuellement (15,16) est prévue
et/ou
**en ce que** pour chaque groupe de cylindres (7-9;10-13), une commande autonome et à manier individuellement (15,16) est prévue.

3. Appareil de manutention selon l'une des revendications précédentes, **caractérisé en ce que** l'organe de manutention est constitué d'au moins un cylindre coupeur (5) et d'un cylindre transporteur et nettoyeur (6) qui lui est parallèle, par exemple un cylindre à disque (6).

4. Appareil de manutention selon l'une des revendications précédentes, **caractérisé en ce que** les cylindres (7-13) formant l'étage de transport sont respectivement constitués d'un corps cylindrique (17) de forme cylindrique circulaire au moins sur la surface extérieure ou enveloppante, avec une structure (18) rappelant une vis sans fin disposée sur ce corps de cylindre.

5. Appareil de manutention selon l'une des revendications précédentes, **caractérisé en ce que** le au moins un cylindre (7-9) du premier groupe de cylindres est incliné à l'horizontale de manière que l'extrémité de cylindre adjacente à la sortie du produit de moisson (19) est plus haute que l'extrémité de cylindre située loin de la sortie du produit de moisson (19).

6. Appareil de manutention selon l'une des revendications précédentes, **caractérisé en ce que** le au moins un premier et/ou le au moins deuxième groupe de cylindres présente au moins deux cylindres (7-9;10-13) et **en ce que** au moins les cylindres du groupe respectif de cylindres sont disposés avec leurs axes sur des niveaux mutuellement parallèles, de préférence des niveaux horizontaux ou essentiellement horizontaux.

7. Appareil de manutention selon l'une des revendications précédentes, **caractérisé en ce que** la distance entre les éléments, par exemple les cylindres (5,6) de l'organe de manutention et la distance entre l'organe de manutention et le cylindre adjacent de l'étage de transport ainsi qu'entre les cylindres adjacents de l'étage de transport est plus petite que les dimensions des racines et tubercules (2).

8. Appareil de manutention selon l'une des revendications précédentes, **caractérisé en ce que** les cylindres (7-9) du premier groupe de cylindres sont exécutés identiquement et peuvent être commandés dans un et même sens de rotation par la commande associée (15).

9. Appareil de manutention selon l'une des revendications précédentes, **caractérisé en ce que** des cylindres mutuellement adjacents (10-13) du deuxième groupe de cylindres sont, par rapport à la structure rappelant une vis sans fin (18), exécutés en sens inverse et peuvent être entraînés en sens inverse par la commande (16).

10. Appareil de manutention selon l'une des revendications précédentes, **caractérisé en ce que** la commande respective (14,15,16) est agencée sur un côté, situé éloigné de la sortie du produit de moisson (19), du au moins un organe de manutention (5,6) et de l'étage de transport formé par les cylindres (7-13).

11. Appareil de manutention selon l'une des revendications précédentes, **caractérisé en ce que** la sortie du produit de moisson est formée d'un transporteur, par exemple une bande transporteuse (19 dont le sens de transport est orienté à la verticale ou en oblique par rapport à la première et à la deuxième direction de transport (A) des groupes de cylindres (7-9;10-13).

12. Appareil de manutention selon l'une des revendications précédentes, **caractérisé en ce que** des deux côtés de la sortie du produit de moisson (19) est prévu chaque fois au moins un organe de manutention (5,6) ainsi qu'un étage de transport formé des cylindres (7-13).

13. Appareil de manutention selon l'une des revendications précédentes, **caractérisé en ce que** le au moins un cylindre (7-9) du au moins un premier groupe de cylindres forme une barrière surplombant l'étage de transport dont la hauteur diminue à mesure que grandit la distance par rapport à la sortie du produit de moisson (19).

14. Appareil de manutention selon l'une des revendications précédentes, **caractérisé en ce que** les cylindres (10-13) du au moins un deuxième groupe de cylindres transportant le produit de moisson sur la sortie du produit de moisson (19), forment une partie de l'étage de transport montant légèrement vers la sortie du produit de moisson (19),
et/ou
**en ce que** les cylindres (10,13) du au moins un deuxième groupe de cylindres transportant le produit de moisson à la sortie du produit de moisson (19), forment une partie de l'étage de transport exécuté en benne ou en chenal de coulée,
et/ou
**en ce que** les cylindres (5,6) de l'organe de manutention peuvent être entraînés dans le même sens.

15. Procédé de manutention d'un produit de moisson, en particulier de racines et tubercules sur un tas de produits de moisson en utilisant un appareil de manutention d'une machine de chargement et/ou nettoyeuse avec au moins un organe de manutention (5,6) sur un côté frontal de l'appareil de manutention et avec un étage de transport formé de plusieurs cylindres (7-13) raccordés l'un à l'autre et pouvant être entraînés de manière rotative et raccordés à l'organe de manutention (5,6), pour le transport du produit de moisson manutentionné par l'organe de manutention (5,6) sur un transporteur (19) fixé dans le sens de transport et transportant le produit de moisson depuis l'appareil de manutention, les cylindres (7-13) de l'étage de transport formant au moins deux groupes de cylindres (7-9;10-13), dont un premier est exécuté et/ou peut commander un transport du produit de moisson dans une première direction de transport (A) s'éloignant de la sortie du produit de moisson (19) et un deuxième groupe de cylindres est exécuté et/ou peut commander un transport du produit de moisson dans une deuxième direction de transport (B) orientée vers la sortie du produit de moisson (19),
**caractérisé en ce que**
pour la commande du trajet de transport du produit de moisson sur l'étage de transport, au moins la commande du premier groupe de cylindres (7-9) est commandée indépendamment de l'organe de manutention (5,6) et est commandée de manière autonome du au moins un autre groupe de cylindres (10-13).
